# EUROPEAN PATENT SPECIFICATION

(11) **EP 2 713 677 B1**
(45) Date of publication and mention of the grant of the patent: **19.12.2018**
(21) Application number: 13163118.6
(22) Date of filing: 10.04.2013
(51) Int. Cl.: H05B 33/08, H05B 37/02

(54) **Power supply device for LED and light emitting device having the same**
Stromversorgungsvorrichtung für LEDs und lichtemittierende Vorrichtung damit
Dispositif d'alimentation pour DEL et dispositif électroluminescent le comprenant

(30) Priority: 29.08.2012 KR 20120095257
(43) Date of publication of application: 02.04.2014
(73) Proprietor: LG Innotek Co., Ltd., Seoul, 04637 (KR)
(72) Inventor: Kim, Dae Hun, Seoul 100-714 (KR)
(74) Representative: DREISS Patentanwälte PartG mbB

(56) References cited:
- WO-A2-2007/063480
- US-A1- 2010 327 766
- US-A1- 2011 248 643

## Description

### BACKGROUND

The disclosure relates to a power supply device for a light emitting device.

A light emitting diode device (LED) is a light emitting semiconductor serving as a semiconductor PN junction device to convert electrical energy into light energy. The LED is a device to emit light through the recombination between electrons and holes at the PN junction region or the active layer by applying current to a compound semiconductor terminal. US 2010/0327766 A1 discloses a wireless emergency lighting system comprising an LED light source that is powered by an internal power source.

The lighting apparatus employing the LED a s lighting source is controlled through both of wired control and wireless control.

In this case, when the wireless control is performed, as well as the wired control performed by receiving basic power through a cable, a wireless module is required to make wireless communication.

Since the wireless module receives a wireless control signal applied from the external device to generate the lighting control signal, the wireless module must be always maintained at an on-state.

Therefore, the power is always required to maintain the on-state of the wireless module, and the power may be obtained from power applied through the wired control.

However, if the wired control module is always maintained at the on-state for the wireless control, the great quantity of standby power is consumed.

To this end, a scheme employing a backup-battery has been suggested. Since the backup-battery has the endurance weaker than that of the light emitting diode, problems may be caused in the replacement of the backup-battery.

### SUMMARY

The embodiment provides a power supply device for a light emitting diode device capable of reducing the standby power for the wireless control.

According to the embodiment, there is provided a power supply device including a wired controller receiving AC power to generate a driving voltage, and outputting a lighting driving signal, a wireless controller wirelessly receiving a lighting control signal and outputting the lighting control signal to the wired controller, and a standby power supply unit receiving a reference standby voltage based on the driving voltage, storing the reference standby voltage, and supplying the reference standby voltage to the wireless controller as standby power.

In addition, according to the embodiment, there is provided a lighting apparatus including a lighting unit including a plurality of lighting emitting diodes, and a lighting control unit receiving AC power, and receiving a lighting control signal for the lighting unit through a wired scheme or a wireless scheme to output a lighting driving signal to the lighting unit. The lighting control unit includes a capacitor storing a reference standby voltage generated from on the AC power and supplying the reference standby voltage as standby power to wirelessly receive the lighting control signal.

Meanwhile, according to the embodiment, there is provided a method of driving a lighting apparatus including a lighting unit including a plurality of lighting emitting diodes, and a lighting control unit receiving AC power, receiving a lighting control signal for the lighting unit through a wired scheme or a wireless scheme to output a lighting driving signal to the lighting unit, and including a capacitor storing a reference standby voltage generated from the AC power and supplying the reference standby voltage as standby power to wirelessly receive the lighting control signal. The method includes periodically checking a voltage level of the capacitor, charging the capacitor with the AC power if the voltage level of the capacitor is lower than a first reference voltage, and discharging the voltage of the capacitor as a voltage for standby power by cutting off the AC power if the voltage level of the capacitor is higher than a level of a second reference voltage.

As described above, according to the lighting control device based on wired/wireless communication of the present invention, the power is always obtained from the super capacitor to turn on the wireless controller, so that the turn-on state of the power generator of the wired controller is not always required. Accordingly, the power consumption can be reduced by reducing the standby power. In addition, the light emitting diode can be semipermanently realized according to the life span thereof by employing the super capacitor, so that the reliability of the operation of the wireless controller can be ensured.

### BRIEF DESCRIPTION OF THE DRAWINGS

FIG. 1 is a view showing a lighting apparatus according to the embodiment;
FIG. 2 is a block diagram showing the structure of a wired controller of FIG. 1;
FIG. 3 is a block diagram showing the structure of a wireless controller of FIG. 2;
FIG. 4 is a block diagram showing the structure of a standby power supply unit of FIG. 3;
FIG. 5 is a flowchart showing the operation of a lighting control module of FIG. 1; and
FIG. 6 is a detailed flowchart showing an initialization step of FIG. 5.

### DETAILED DESCRIPTION OF THE EMBODIMENTS

Hereinafter, an exemplary embodiment of the disclosure will be described to be implemented by those skilled in the art in detail with reference to accompanying drawings. However, the disclosure can be variously modified, and not limited to the embodiment.

In the following description, when a predetermined part "includes" a predetermined component, the predetermined part does not exclude other components, but may further include other components if there is a specific opposite description.

According to a lighting control device including a wireless controller of the present invention, the lighting control device can be wirelessly controlled without always turning on a wired controller by employing an additional power unit to supply power for wireless control.

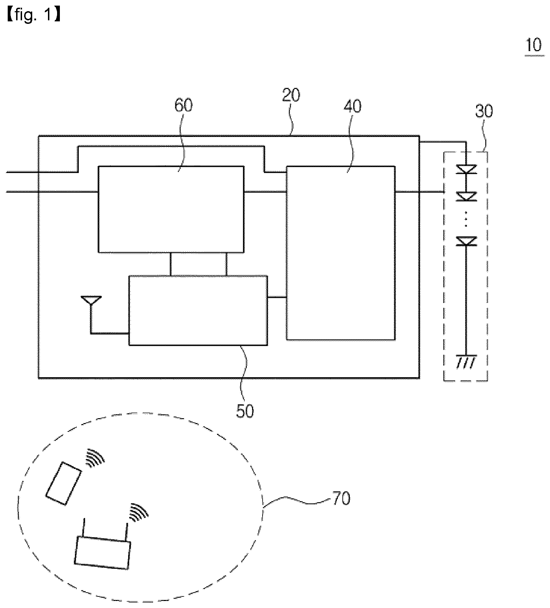

Hereinafter, a lighting apparatus 10 according to the embodiment of the disclosure will be described with reference to FIGS. 1 to 4.

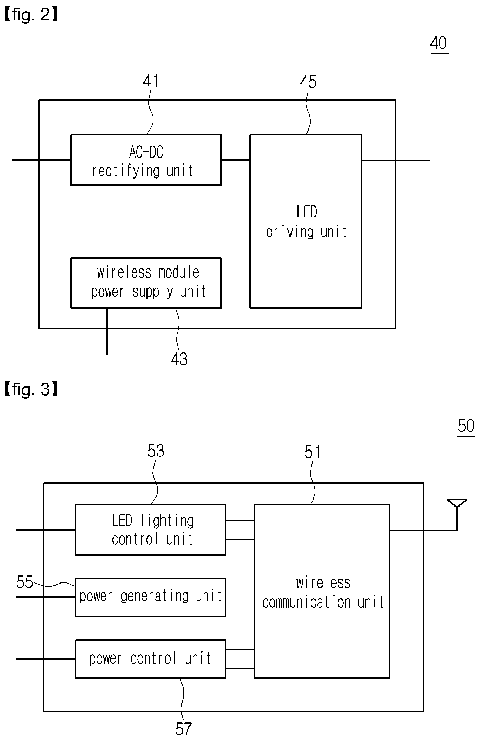

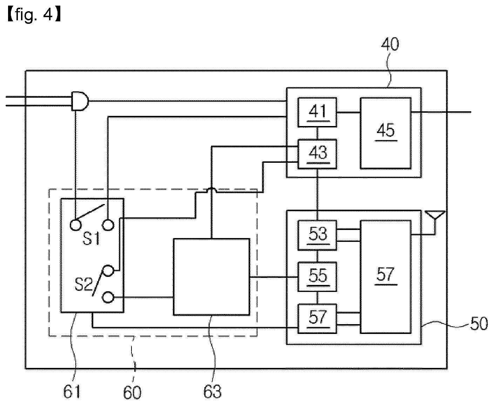

FIG. 1 is a view showing the lighting apparatus 10 according to the embodiment, FIG. 2 is a block diagram showing the structure of a wired controller 40 of FIG. 1, and FIG. 3 is a block diagram showing the structure of a wireless controller 50 of FIG. 2. FIG. 4 is a block diagram showing the structure of a standby power supply unit 60 of FIG. 3.

Referring to FIG. 1, the lighting apparatus 10 includes a lighting unit 30 and a lighting control unit 20.

The lighting unit 30 includes a plurality of light emitting diodes, and the light emitting diodes may be connected to each other in series as shown in FIG. 1. Alternatively, the light emitting diodes may be connected to each other in parallel.

The lighting unit 30 may be provided in the form of a lamp by grouping the light emitting diodes. Alternately, the lighting unit 30 may include a light guide plate or a diffusion plate to serve as a surface light source.

In addition, the lighting unit 30 may include a plurality of light emitting diodes to represent a plurality of colors. For example, when the light emitting diode includes red, blue, and green light emitting diodes, the lighting unit 30 may adjust the color temperature by controlling an on/off-state and an on/off time of each light emitting diode.

The lighting control unit 20 generates a driving signal to control an on/off-state of the lighting unit 30.

The driving signal for the lighting serves as a pulse signal, and the turn-on time of the light emitting diode is determined according to the pulse duty of the pulse signal.

The lighting control unit 20 includes the wired controller 40, the wireless controller 50, and the standby power supply unit 60.

The wired controller 40 receives and converts reference AC voltage through a cable and generates driving voltage. The wired controller 40 receives a control signal through a cable and generates a lighting driving signal according to the control signal.

The wired controller 40 includes an AC-DC rectifying unit 41, a wireless module power supply unit 43, and an LED driving unit 45 as shown in FIG. 2.

The AC-DC rectifying unit 41 receives 110/220V AC voltage, and converts the AC voltage into driving voltage having a level to drive the lighting control unit 20.

The driving voltage is DC voltage. The AC-DC rectifying unit 41 may include a rectifying circuit to convert AC into DC and a transformer to adjust a voltage level.

The rectifying circuit may include a bridge rectifier, and the transformer may include a typical transformer such as a flyback converter.

The LED driving unit 45 receives the driving voltage from the AC-DC rectifying unit 41 and operates by the driving voltage to generate a lighting driving signal having a level to turn on the light emitting diode of the lighting unit 30.

The LED driving unit 45 may include a pulse width modulator, and may adjust the brightness of the light emitting diode according to the pulse duty rate.

The LED driving unit 45 may receive the driving voltage of 19V, but the embodiment is not limited thereto.

Meanwhile, the wired controller 40 includes the wireless module power supply unit 43.

The wireless module power supply unit 43 receives the driving voltage from the AC-DC rectifying unit 41 and converts the driving voltage to generate wireless reference voltage used to generate the driving voltage for driving the wireless controller 50.

The wireless reference voltage may be 3.6V. The value of the wireless reference voltage may vary depending on the specification of the wireless controller 50.

The wireless module power supply unit 43 may include a DC-DC converter.

Meanwhile, the lighting control unit 20 includes the wireless controller 50, such as a remote controller or a smart phone that is generally used, to control the lighting unit 30 by receiving a control signal through a wireless network.

The wireless controller 50 includes a wireless communication unit 51 connected to an antenna, an LED lighting control unit 53, a power generating unit 55, and a power control unit 57.

The wireless communication unit 51 is connected to the antenna to transreceive a wireless control signal through a wireless network like a wireless device, preferably, a remote controller or a smart phone.

The wireless network may employ a short range communication scheme such as a ZigBee scheme or a Bluetooth scheme. Alternatively, the wireless network may include an RFID.

In addition, the wireless network may make communication by using WiFi.

The wireless communication unit 51 amplifies and demodulates a wireless control signal received through the wireless network to extract a base control signal from the wireless control signal.

The LED lighting control unit 53 receives the base control signal received therein from the wireless communication unit 51, extracts dimming information and color temperature information, which is used to drive the lighting unit 30, from the base control signal, and outputs the dimming information and the color temperature information to the LED driving unit 45.

Meanwhile, the wireless communication unit 51 must be always turned on in order to receive the wireless control signal irregularly applied from the external device.

In other words, the wireless communication unit 51 operates at a sleep mode, which is a standby state to receive the wireless control signal, in addition to an active mode of receiving and processing the wireless control signal.

The wireless communication unit 51 must be always turned on in order to maintain the sleep mode. In this case, the wireless communication unit 51 requires standby power.

In order to apply the standby power for the turn-on state of the wireless communication unit 51, the wireless controller 50 includes the power generating unit 55 and the power control unit 57.

The power generating unit 55 receives the reference standby power supplied from the standby power supply unit 60, and converts the reference standby power into the standby power having a level required at the sleep mode of the wireless communication unit 51.

The power generating unit 55 may include a DC-DC converter.

Meanwhile, the power control unit 57 periodically senses the state of the standby power supply unit 60 to output a switching signal so that the wireless reference voltage of the wireless module power supply unit 43 is supplied to the wireless module power supply unit 43 according to the power levels of the standby power supply unit 60.

The wireless controller 50 may further include a module control unit (not shown) to wholly control the operations of the wireless communication unit 51, the power generating unit 55, and the power control unit 57. The module control unit may be realized by using a processor.

Meanwhile, referring to FIG. 4, the lighting control unit 20 further includes the standby power supply unit 60.

The standby power supply unit 60 includes a switching unit 61, which is used to supply the AC power to the wired controller 40 and to supply the wireless reference voltage to the standby power supply unit 60, and the storage unit 63 to receive and store the wireless reference voltage transmitted through the switching unit 61.

The storage unit 63 includes a super capacitor. The super capacitor has a large capacity, and is semipermanently available.

The super capacitor of the storage unit 63 repeats a cycle of receiving the wireless reference power through the switching unit 61, being charged with the wireless reference power, and then being discharging so that the power is supplied to the power generating unit 55 of the wireless controller 50.

The super capacitor has a charge capacity in the range of 3.6 V to 5.5 V.

The switching unit 61 includes relay switches S1 and S2. In particular, the switching unit 61 includes at least two switches S1 and S2.

The switching unit 61 includes the first switch S1 used to supply the AC power to the AC-DC rectifying unit 41 of the wired controller 40 and the second switch S2 used to supply the wireless reference power of the wireless module power supply unit 43 to the super capacitor.

The first and second switches S1 and S2 are turned on or turned off by receiving the switching signal from the power control unit 57. The first and second switches S1 and S2 are simultaneously turned on or simultaneously turned off.

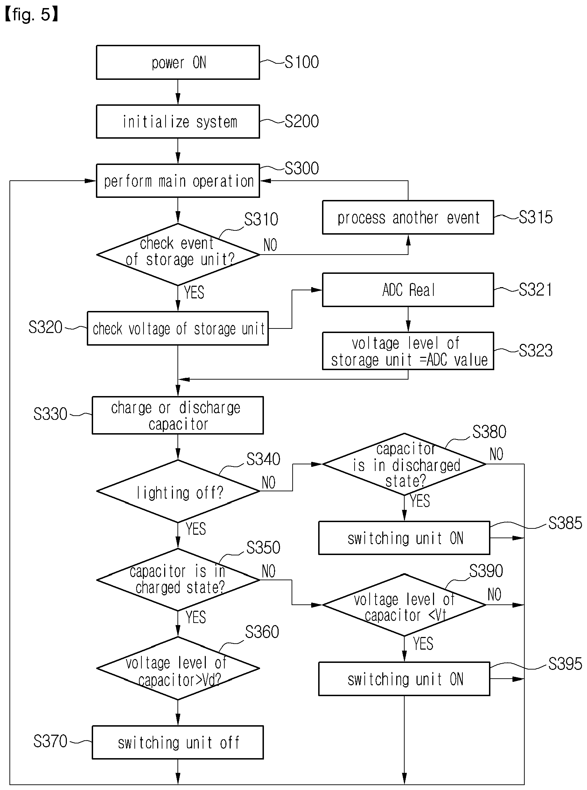

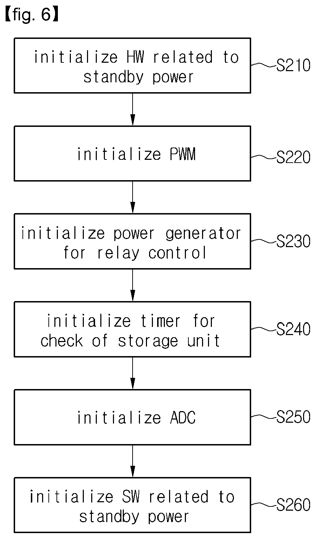

Hereinafter, the operation of generating the standby voltage of the lighting control unit 20 will be described with reference to FIGS. 5 and 6.

First, if the AC power is applied to the wired controller 40 so that the wired controller 40 starts to operate (step S100), the entire system is initialized (step S200).

The system initialization process may be performed as shown in FIG. 6.

In other words, hardware related to the standby power is initialized (step S210). In other words, the wireless module power supply unit 43, the power generating unit 55, and the power control unit 57 are initialized.

Next, the PWM of the LED driving unit 45 is initialized so that the control signal may be received (step S220).

Then, after the power control unit 57 initializes a relay control oscillator to generate the switching signal (step S230), the power control unit 57 initializes the timer for checking the storage unit of the wireless control unit 50 (step S240). Subsequently, the power control unit 57 initializes an AC-DC converter thereof (step S250) to initialize a residual voltage level read out of the super capacitor.

Finally, the power control unit 50 initializes software related to the standby power so that the operation of generating the standby power can be started (step S260).

If the initialization operation is terminated, the processor of the wireless module unit performs a main operation of generating the standby power (step S300).

First, the wireless control unit 50 determines if an event for checking the storage unit 63 occurs (step S310).

If the event for checking the storage unit 63 is periodically generated, the power control unit 57 checks the voltage of the super capacitor of the storage unit 63 (step S320). In this case, if the event for checking the storage unit 63 does not occur, another event may be processed (step S315).

The power control unit 57 detects the voltage level of the super capacitor to convert the voltage level into a predetermined level through the AC-DC converter (step S321), and stores the converted voltage level as an ADC value (step S323).

Next, the power control unit 57 charges or discharges the super capacitor depending on the stored ADC value (step S330).

First, the power control unit 57 determines if the lighting unit 30 is turned off (step S340). If the lighting unit 30 is turned off, the power control unit 57 senses the charged state of the super capacitor (step S350).

If the super capacitor is fully charged, and the ADC value is greater than a Vd value (step S360), the first and second switches S1 and S2 of the switching unit 61 are turned off (step S370).

In this case, the Vd value may be 3.25V which is the minimum standby voltage required at the sleep mode of the wireless communication unit 51.

If the first and second switches S1 and S2 of the switching unit 61 are turned off as described above, the wireless module power supply unit 43 is disconnected from the super capacitor, so that the super capacitor is maintained at a floating state. Accordingly, the charges stored in the super capacitor are discharged.

Meanwhile, if the lighting unit 30 is maintained at the on-state, the super capacitor is checked for the discharge state (step S380).

If the super capacitor is at the discharge state, the first and second switches S1 and S2 of the switching unit 61 are simultaneously turned on so that the super capacitor is charged (step S385).

Meanwhile, if the super capacitor is not charged in the state that the lighting unit is turned off, and if the ADC value is less than the Vt (step S390), the first and second switches S1 and S2 of the switching unit 61 are turned on so that the super capacitor is charged (step S395).

If the ADC value is greater than the Vt, the present state is maintained.

In this case, the Vt value may be 2.4 V, but the embodiment is not limited thereto.

The wireless communication unit 51 of the wireless control unit 50 may be maintained at the sleep mode for at least 20 minutes if the standby power is implemented from the voltage charged in the super capacitor. Accordingly, the period may be set within 20 minutes.

In addition, the voltage level of the super capacitor is periodically detected and the charging and discharging of the super capacitor are induced, thereby supplying the standby power to continuously maintain the sleep mode.

Although the exemplary embodiments of the present invention have been described, it is understood that the present invention should not be limited to these exemplary embodiments but various changes and modifications can be made by one ordinary skilled in the art within present invention as hereinafter claimed.

## Claims

1. A lighting apparatus (10) comprising:
a lighting unit (30) including
a plurality of light emitting diodes; and
a lighting control unit (20) adapted for controlling the lighting unit (30),
wherein the lighting control unit (20) comprises:
a wired controller (40) adapted for receiving AC power to generate a driving voltage and outputting a lighting driving signal to the lighting unit (30);
a wireless controller (50) adapted for wirelessly receiving a lighting control signal and outputting the lighting control signal to the wired controller (40); and
a standby power supply unit (60) adapted for supplying the AC power to an AC-DC rectifying unit (41) of the wired controller (40),
wherein the standby power supply unit (60) is adapted to receive a reference standby voltage based on the driving voltage from the wired controller (40), to store the reference standby voltage in a capacitor and to supply the reference standby voltage to the wireless controller (50) as standby power through a power control unit (57),
wherein the standby power supply unit (60) comprises:
a switching unit (61) adapted for supplying the reference standby voltage according to a switching signal that is transmitted from the wireless controller (50); and
wherein the capacitor is charged with the reference standby voltage and is discharged by supplying the reference standby voltage to the wireless controller (50);
wherein the standby power supply unit (60) comprises a first switch (S1) adapted for supplying the AC power to the wired controller (40) and a second switch (S2) adapted for supplying the reference standby voltage to the capacitor,
**characterized in that**
the power control unit (57) is adapted for detecting a voltage level of the capacitor to convert the voltage level into a predetermined level and for storing the converted voltage level as an ADC value and **in that**
when the lighting unit (30) is turned off and the capacitor is in a charged state and the ADC value is greater than a Vd value, the first switch (S1) and the second switch (S2) are turned off, wherein the Vd value is a minimum standby voltage required at a sleep mode of the wireless communication unit (51);
when the lighting unit (30) is maintained at an on-state and the capacitor is in a discharge state, the first switch (S1) and the second switch (S2) are turned on;
when the capacitor is not charged in the state that the lighting unit is turned off and the ADC value is less than a Vt value, the first switch (S1) and the second switch (S2) are turned on; and
when the capacitor is not charged in the state that the lighting unit is turned off, and if the ADC value is greater than the Vt value, the first switch (S1) and the second switch (S2) are maintained at a present state.

2. The lighting apparatus (10) of claim 1, wherein the wireless controller (50) comprises:
the wireless communication unit (51) adapted for receiving and processing the lighting control signal from an outside through a wireless network;
a power generating unit (55) adapted for receiving the reference standby voltage from the capacitor and converting the reference standby voltage into a voltage having a standby power level of the wireless communication unit (51); and
a power control unit (57) adapted for detecting a voltage level of the capacitor to output the switching signal to the first switch (S1) and the second switch (S2).

3. The lighting apparatus (10) of claim 2, wherein the first and second switches (S1, S2) are simultaneously turned on or turned off.

4. The lighting apparatus (10) of claim 3, wherein the wireless communication unit (51) uses the standby power at the sleep mode to receive the lighting control signal.

5. The lighting apparatus (10) of claim 4, wherein the lighting apparatus (10) supplies the power to a plurality of lighting units (30).

6. The lighting apparatus (10) of claim 2, wherein the power control unit (57) periodically checks the voltage level of the capacitor.

7. The lighting apparatus (10) of claim 6, wherein the power control unit (57) initializes an operation of a lighting control unit before checking the voltage level of the capacitor.

## Patentansprüche

1. Beleuchtungseinrichtung (10), Folgendes umfassend:
eine Beleuchtungseinheit (30), die mehrere Leuchtdioden; und eine Beleuchtungssteuereinheit (20) enthält, die angepasst ist, die Beleuchtungseinheit (30) zu steuern, wobei die Beleuchtungssteuereinheit (20) Folgendes umfasst:
eine verdrahtete Steuervorrichtung (40), die angepasst ist, Wechselstrom zu empfangen, um eine Antriebsspannung zu erzeugen, und ein Beleuchtungsantriebssignal an die Beleuchtungseinheit (30) auszugeben;
eine drahtlose Steuervorrichtung (50), die angepasst ist, um ein Beleuchtungssteuersignal drahtlos zu empfangen und das Beleuchtungssteuersignal an die verdrahtete Steuervorrichtung (40) auszugeben; und
eine Reservestromzuführeinheit (60), die angepasst ist, den Wechselstrom an eine Wechselstrom-Gleichstrom-Rektifiziereinheit (41) der verdrahteten Steuervorrichtung (40) zuzuführen,
wobei die Reservestromzuführeinheit (60) angepasst ist, um eine Referenzreservespannung auf Grundlage der Antriebsspannung von der verdrahteten Steuervorrichtung (40) zu empfangen, die Referenzreservespannung in einem Kondensator zu speichern und die Referenzreservespannung an die drahtlose Steuervorrichtung (50) als Reservestrom durch eine Stromsteuereinheit (57) zuzuführen, wobei die Reservestromzuführeinheit (60) Folgendes umfasst:
eine Schalteinheit (61), die angepasst ist, die Referenzreservespannung gemäß einem Schaltersignal, das von der drahtlosen Steuervorrichtung (50) übertragen wird, zuzuführen; und
wobei der Kondensator mit der Referenzreservespannung geladen wird und durch Zuführen der Referenzreservespannung an die drahtlose Steuervorrichtung (50) entladen wird;
wobei die Reservestromzufuhreinheit (60) einen ersten Schalter (S1), der angepasst ist, den Wechselstrom an die verdrahtete Steuervorrichtung (40) zuzuführen, und einen zweiten Schalter (S2) umfasst, der angepasst ist, die Referenzreservespannung an den Kondensator zuzuführen,
**dadurch gekennzeichnet, dass**
die Stromsteuereinheit (57) angepasst ist, ein Spannungsniveau des Kondensators zu erfassen, um das Spannungsniveau auf ein vorbestimmtes Niveau umzuwandeln, und das umgewandelte Spannungsniveau als einen A/D-Wandlerwert zu speichern, und dadurch, dass, wenn die Beleuchtungseinheit (30) ausgeschaltet ist und der Kondensator sich in einem geladenen Zustand befindet und der A/D-Wandlerwert größer als ein Vd-Wert ist, der erste Schalter (S1) und der zweite Schalter (S2) ausgeschaltet werden, wobei der Vd-Wert eine minimale Reservespannung ist, die in einem Ruhezustand der drahtlosen Kommunikationseinheit (51) benötigt wird;
wenn die Beleuchtungseinheit (30) in einem eingeschalteten Zustand gehalten wird und sich der Kondensator in einem entladenen Zustand befindet, sind der erste Schalter (S1) und der zweite Schalter (S2) eingeschaltet;
wenn der Kondensator in dem Zustand, in dem die Beleuchtungseinheit ausgeschaltet ist und der A/D-Wandlerwert weniger als ein Vt-Wert ist, nicht geladen ist, sind der erste Schalter (S1) und der zweite Schalter (S2) eingeschaltet; und
wenn der Kondensator in dem Zustand, in dem die Beleuchtungseinheit ausgeschaltet ist, nicht geladen ist,
und falls der A/D-Wandlerwert größer als der Vt-Wert ist, werden der erste Schalter (S1) und der zweite Schalter (S2) in einem gegenwärtigen Zustand gehalten.

2. Beleuchtungseinrichtung (10) nach Anspruch 1, wobei die drahtlose Steuervorrichtung (50) Folgendes umfasst:
die drahtlose Kommunikationseinheit (51), die angepasst ist, das Beleuchtungssteuersignal von einer Außenseite durch ein drahtloses Netzwerk zu empfangen und zu verarbeiten;
eine Stromerzeugungseinheit (55), die angepasst ist, die Referenzreservespannung von dem Kondensator zu empfangen und die Referenzreservespannung in eine Spannung mit einem Reservestromniveau der drahtlosen Kommunikationseinheit (51) umzuwandeln; und
eine Stromsteuereinheit (57), die angepasst ist, um ein Spannungsniveau des Kondensators zu ermitteln, um das Schaltsignal an den ersten Schalter (S1) und den zweiten Schalter (S2) auszugeben.

3. Beleuchtungseinrichtung (10) nach Anspruch 2, wobei der erste und der zweite Schalter (S1, S2) gleichzeitig ein- oder ausgeschaltet sind.

4. Beleuchtungseinrichtung (10) nach Anspruch 3, wobei die drahtlose Kommunikationseinheit (51) den Reservestrom in dem Ruhezustand verwendet, um das Beleuchtungssteuersignal zu empfangen.

5. Beleuchtungseinrichtung (10) nach Anspruch 4, wobei die Beleuchtungseinrichtung (10) den Strom an mehrere Beleuchtungseinheiten (30) zuführt.

6. Beleuchtungseinrichtung (10) nach Anspruch 2, wobei die Stromsteuereinheit (57) das Spannungsniveau des Kondensators regelmäßig überprüft.

7. Beleuchtungseinrichtung (10) nach Anspruch 6, wobei die Stromsteuereinheit (57) einen Betrieb einer Beleuchtungssteuereinheit vor dem Überprüfen des Spannungsniveaus des Kondensators initiiert.

## Revendications

1. Appareil d'éclairage (10) comprenant :
une unité d'éclairage (30) comportant une pluralité de diodes électroluminescentes ; et
une unité de commande de l'éclairage (20) conçue pour commander l'unité d'éclairage (30),
dans lequel l'unité de commande de l'éclairage (20) comprend :
un dispositif de commande filaire (40) conçu pour recevoir un courant électrique CA afin de générer une tension de pilotage et d'émettre un signal de pilotage de l'éclairage vers l'unité d'éclairage (30) ;
un dispositif de commande sans fil (50) conçu pour recevoir, sans fil, un signal de commande de l'éclairage et émettre le signal de commande de l'éclairage vers le dispositif de commande filaire (40) ; et
une unité d'alimentation électrique de secours (60) conçue pour alimenter en courant CA un redresseur de courant CA-CC (41) du dispositif de commande filaire (40),
dans lequel l'unité d'alimentation électrique de secours (60) est conçue pour recevoir une tension de secours de référence basée sur la tension de pilotage fournie par le dispositif de commande filaire (40), pour stocker la tension de secours de référence dans un condensateur et pour fournir la tension de secours de référence au dispositif de commande sans fil (50) en tant qu'alimentation électrique de secours par l'intermédiaire d'une unité de commande de puissance (57),
dans lequel l'unité d'alimentation électrique de secours (60) comprend :
une unité formant commutateur (61) conçue pour fournir la tension de secours de référence en fonction d'un signal de commutation qui est transmis depuis le dispositif de commande sans fil (50) ; et
dans lequel le condensateur est chargé en tension de secours de référence et est déchargé en fournissant la tension de secours de référence au dispositif de commande sans fil (50) ;
dans lequel l'unité d'alimentation électrique de secours (60) comprend un premier commutateur (S1) conçu pour alimenter en courant CA le dispositif de commande filaire (40) et un second commutateur (S2) conçu pour alimenter en tension de secours de référence le condensateur,
**caractérisé en ce que**
l'unité de commande de puissance (57) est conçue pour détecter un niveau de tension du condensateur pour convertir le niveau de tension en un niveau prédéterminé et pour stocker le niveau de tension converti en valeur de conversion analogique-numérique et **en ce que**
lorsque l'unité d'éclairage (30) est mise sur arrêt et que le condensateur est en état de charge et que la valeur de conversion analogique-numérique est supérieure à une valeur Vd, le premier commutateur (S1) et le second commutateur (S2) sont mis à l'arrêt, dans lequel la valeur Vd est une tension de secours minimum requise en mode veille de l'unité de communication sans fil (51) ;
lorsque l'unité d'éclairage (30) est maintenue dans un état de marche et que le condensateur est en état de décharge, le premier commutateur (S1) et le second commutateur (S2) sont mis en marche ;
lorsque le condensateur n'est pas chargé, dans l'état où l'unité d'éclairage est mise à l'arrêt et lorsque la valeur de conversion analogique-numérique est inférieure à une valeur Vt, le premier commutateur (S1) et le second commutateur (S2) sont mis en marche ; et
lorsque le condensateur n'est pas chargé dans l'état où l'unité d'éclairage est mise à l'arrêt, et lorsque la valeur de conversion analogique-numérique est supérieure à la valeur Vt, le premier commutateur (S1) et le second commutateur (S2) sont maintenus dans l'état actuel.

2. Appareil d'éclairage (10) selon la revendication 1, dans lequel le dispositif de commande sans fil (50) comprend :
l'unité de communication sans fil (51) conçue pour recevoir et traiter le signal de commande de l'éclairage depuis l'extérieur, par l'intermédiaire d'un réseau sans fil ;
une unité de génération de courant électrique (55) conçue pour recevoir la tension de secours de référence envoyée par le condensateur et convertir la tension de secours de référence en une tension ayant un niveau d'alimentation électrique de secours de l'unité de communication sans fil (51) ; et
une unité de commande de l'alimentation électrique (57) conçue pour détecter un niveau de tension du condensateur afin d'émettre le signal de commutation vers le premier commutateur (S1) et vers le second commutateur (S2).

3. Appareil d'éclairage (10) selon la revendication 2, dans lequel les premier et second commutateurs (S1, S2) sont mis en marche ou à l'arrêt simultanément.

4. Appareil d'éclairage (10) selon la revendication 3, dans lequel l'unité de communication sans fil (51) utilise l'alimentation électrique de secours en mode veille afin de recevoir le signal de commande de l'éclairage.

5. Appareil d'éclairage (10) selon la revendication 4, dans lequel l'appareil d'éclairage (10) alimente en courant électrique une pluralité d'unités d'éclairage (30).

6. Appareil d'éclairage (10) selon la revendication 2, dans lequel l'unité de commande d'alimentation électrique (57) vérifie périodiquement le niveau de tension du condensateur.

7. Appareil d'éclairage (10) selon la revendication 6, dans lequel l'unité de commande d'alimentation électrique (57) initialise le fonctionnement d'une unité de commande de l'éclairage avant de vérifier le niveau de tension du condensateur.
